# FASCICULE DE BREVET EUROPEEN

(11) **EP 3 097 055 B1**
(45) Date de publication et mention de la délivrance du brevet: **22.05.2019**
(21) Numéro de dépôt: 15705714.2
(22) Date de dépôt: 21.01.2015
(51) Int. Cl.: C02F 1/36, C02F 1/467, C02F 101/32

(54) **PROCEDE DE TRAITEMENT D'UN LIQUIDE CONTENANT UN POLLUANT ORGANIQUE**
VERFAHREN ZUR BEHANDLUNG EINER FLÜSSIGKEIT MIT EINER ORGANISCHEN VERUNREINIGUNG
METHOD FOR TREATING A LIQUID CONTAINING AN ORGANIC POLLUTANT

(30) Priorité: 21.01.2014 FR 1450489
(43) Date de publication de la demande: 30.11.2016
(73) Titulaire: ISB Water, 92000 Nanterre (FR)
(72) Inventeur: PROFIT, Grégoire, F-92310 Sevres (FR); PROFIT, Alexandre, F-92190 Meudon (FR)
(74) Mandataire: Nony
(86) Numéro de dépôt international: PCT/IB2015/050464
(87) Numéro de publication internationale: WO 2015/110967

(56) Documents cités:
- WO-A1-2012/161366
- CN-U- 201 567 249

## Description

### Domaine technique

L'invention concerne un procédé de traitement d'un liquide contenant un polluant organique.

### Etat de la technique

Les procédés biologiques sont largement utilisés pour traiter les liquides contenant des composés organiques. Cependant certains composés organiques, appelés « polluants organiques persistants » ou « POP », sont réfractaires à la biodégradation et peuvent même être toxiques pour les microorganismes utilisés et diminuer l'efficacité de ces procédés. Pour éliminer ces composés organiques, il est possible de mettre en oeuvre des procédés d'adsorption ou d'oxydation chimique. En particulier, les « procédés d'oxydation avancée » (ou POA), décrits par Glaze et al. [Glaze W. H., Kang J.W. Chapin D. H., « The chemistry of water treatment processes involving ozone, hydrogen peroxide and ultraviolet radiation. Ozone Sci. Eng. 9 (1987) 335-352], sont des procédés de traitement des eaux opérant à température et pression ambiantes qui conduisent à la formation en solution et en quantité élevée, d'oxydants très puissants, les radicaux hydroxyles (OH^{∘}). Les procédés POA peuvent inclure les procédés électrochimiques de production de OH^{∘} à la surface d'une anode à haute surtension d'oxygène sous haute densité de courant, par exemple les procédés d'oxydation anodique en présence de H₂O₂.

Les radicaux hydroxyles OH^{∘} sont avantageusement fortement réactifs avec les composés organiques et donc capables, par oxydation radicalaire, de rompre des molécules de composés organiques très stables. Pour générer des radicaux hydroxyles, le procédé Fenton en particulier consiste en une décomposition du peroxyde d'hydrogène (H₂O₂) par des cations ferreux, suivant la réaction suivante :

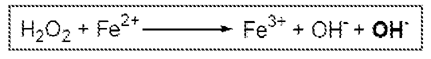

Ce procédé nécessite, pour être efficace, le maintien d'un pH entre 2,0 et 4,0, avec une valeur optimale de pH à 2,8. Classiquement, un dispositif de régulation de pH doit donc être prévu.

La mise en oeuvre d'une telle régulation du pH est coûteuse, techniquement difficile à réaliser, et nécessite toujours des précautions supplémentaires pour protéger le matériel et l'environnement, et assurer la sécurité des personnes.

Par ailleurs, le procédé Fenton implique une addition de H₂O₂, ce qui est coûteux et complexe.

En outre, la réaction de l'ion Fe³⁺ avec OH⁻ conduit à la production de boues formées par les hydroxydes Fe(OH)₃.

En outre, les cations ferreux Fe²⁺ sont classiquement obtenus par addition directe d'un sel ferreux, notamment de FeSO₄ ou d'autres composés solide d'oxydes de fer (II&III) tels que l'hématite, la goethite, et la magnétite. Des sous-systèmes techniques dédiés et complexes doivent alors être mis en place.

Enfin, l'efficacité du procédé Fenton reste limitée.

Les documents CN 201 567 249 U et WO 2012/216366 A1 décrivent des procédés typiques connus de l'état de la technique.

Il existe donc un besoin pour une nouvelle solution de traitement permettant de résoudre, au moins partiellement, un ou plusieurs des problèmes susmentionnés.

### Résumé de l'invention

Selon l'invention, on atteint ce but au moyen d'un procédé de traitement d'un liquide comportant un polluant organique, ledit procédé étant conforme à la revendication 1.

Comme on le verra plus en détail dans la suite de la description, de manière surprenante, un tel procédé permet, de manière simple et efficace, de traiter efficacement le liquide avec une consommation réduite d'additifs, voire sans utilisation d'additifs.

Le générateur de cavitation d'un dispositif utilisé dans le procédé de l'invention génère des bulles qui implosent en créant un ensemble de réactions thermodynamiques et chimiques complexes. En particulier, l'implosion correspond à une augmentation locale considérable de la température et des concentrations. Ces conditions extrêmes locales favoriseraient, de manière inexpliquée, la génération des radicaux hydroxyles par réaction des cations ferreux Fe²⁺ et du constituant oxygéné.

Un dispositif de traitement utilisé dans un procédé l'invention peut encore comporter une ou plusieurs des caractéristiques suivantes :
- le générateur de cavitation est configuré de manière que plus de 50% en nombre des bulles de cavitation générées présentent un diamètre compris entre 40 µm et 5 mm, de préférence compris entre 20 µm et 2 mm ;
- le générateur de cavitation est choisi dans le groupe constitué par un réacteur passif (c'est-à-dire que la cavitation résulte d'une réduction brutale de la pression au sein du liquide par accélération de ce liquide), un générateur d'ultrasons et leur combinaison ;
- le générateur de cavitation ne comporte pas de moteur. De préférence encore, il ne comporte pas de pièce mobile ;
- la chambre d'implosion est disposée de préférence à une distance inférieure à 0,5 m, à 0,3 m, à 0,1 m, de préférence immédiatement en aval du générateur de cations ferreux Fe²⁺; de préférence, la chambre d'implosion des bulles de cavitation est disposée dans une région dans laquelle les cations ferreux sont générés ;
- de préférence, la chambre d'implosion est disposée en aval du générateur de cations ferreux Fe²⁺ ;
- le générateur de cations ferreux ne nécessite aucun apport d'énergie électrique pour fonctionner ;
- le générateur de cations ferreux comporte, de préférence est constitué par une pile de type « Daniell » entre du fer et un premier matériau conducteur électriquement présentant un potentiel d'électrodes supérieur au fer ;
- le premier matériau conducteur électriquement est choisi dans le groupe constitué par le graphite, le graphène, les aciers inoxydables, les alliages de nickel, l'argent, le platine, l'or ;
- de préférence, le premier matériau conducteur électriquement est du graphite, du graphène, un acier inoxydable ou un alliage à base de nickel, en particulier un hastelloy ou un inconel ;
- le couple galvanique est obtenu entre deux masses en fer et en ledit premier matériau conducteur électriquement, respectivement, connectées électriquement l'une à l'autre par contact et par l'intermédiaire dudit liquide à traiter (constituant un électrolyte) ; les masses sont de préférence monoblocs, c'est-à-dire ne sont pas des poudres ;
- le générateur de cations ferreux est disposé, de préférence en aval, à une distance inférieure à 2 mètres, de préférence inférieure à 1 mètre, de préférence inférieure à 0,5 mètre, de préférence inférieure à 0,3 mètre, de préférence inférieure à 0,1 mètre du générateur de cavitation, voire en contact avec le générateur de cavitation ;
- le fluide oxygéné est de l'air et/ou du peroxyde d'hydrogène et/ou de l'ozone ;
- le fluide oxygéné est de préférence un gaz, et/ou une solution aqueuse de peroxyde d'hydrogène ;
- la chambre d'implosion des bulles de cavitation est disposée dans une région dans laquelle le liquide contient dudit constituant oxygéné ;
- le dispositif d'injection est disposé en amont du générateur de cavitation et/ou du générateur de cations ferreux Fe²⁺ ;
- le dispositif d'injection est disposé de préférence à une distance inférieure à 0,5 m, inférieure à 0,3 m, inférieure à 0,1 m, du générateur de cavitation et/ou du générateur de cations ferreux Fe²⁺ ;
- le dispositif d'injection est de préférence un microbulleur apte à introduire dans le liquide des microbulles du fluide oxygéné présentant un diamètre inférieur à 100 µm, de préférence inférieur à 75 µm, et de préférence supérieur à 25 µm, de préférence supérieur à 50 µm ;
- le microbulleur comporte un bloc poreux et un injecteur adapté pour injecter dudit fluide oxygéné, à travers le bloc poreux, dans le liquide ;
- le bloc poreux est un matériau fritté, de préférence en alliage cuivreux, ou en acier inoxydable, par exemple en PSS™ de la société Pall Corporation ;
- le débit d'injection des microbulles générées par le microbulleur est supérieur à 0,01% et/ou inférieur à 1%, inférieur à 0,5 %, inférieur à 0,1% (V/V) par rapport au débit de liquide à traiter ;
- le générateur de cavitation et/ou la chambre d'implosion et/ou le générateur de cations ferreux sont incorporés dans un réacteur hydrodynamique ;
- de préférence, le réacteur hydrodynamique comporte des premiers canaux, de préférence délimités intérieurement par un matériau diélectrique, de préférence encore ménagés dans un bloc en ledit matériau diélectrique, qui débouchent en aval dans une chambre intermédiaire, le passage du liquide dans les premiers canaux provoquant son accélération et la génération desdites bulles, ladite chambre intermédiaire constituant ladite chambre d'implosion ;
- de préférence, et en particulier si la chambre intermédiaire n'est pas délimitée intérieurement par du fer, le réacteur hydrodynamique comporte, de préférence en amont des premiers canaux, des deuxièmes canaux délimités intérieurement par du fer ;
- de préférence, le réacteur hydrodynamique comporte un boîtier constitué, au moins en partie en ledit premier matériau conducteur électriquement, de manière à constituer un couple galvanique avec le fer ;
- les premiers canaux et/ou les deuxièmes canaux présentent une section longitudinale convergente, puis divergente ;
- le réacteur hydrodynamique comporte un, de préférence deux, voire plus de deux modules de réaction dit « perfectionnés », chaque module de réaction perfectionné étant constitué, de l'amont vers l'aval, par une chambre amont optionnelle, un deuxième bloc comportant une pluralité de deuxièmes canaux délimités intérieurement, au moins partiellement, de préférence totalement, par du fer, de préférence une chambre intermédiaire, un premier bloc comportant une pluralité de premiers canaux, le passage du liquide dans les premiers canaux provoquant son accélération et la génération de bulles de cavitation, et une chambre aval, le passage du liquide dans la chambre aval provocant son ralentissement et l'implosion des bulles de cavitation ;
- le passage du liquide dans lesdits deuxièmes canaux provoque l'accélération du liquide et la génération de bulles de cavitation et, de préférence, les deuxièmes canaux d'un module de réaction perfectionné débouchent dans une chambre intermédiaire apte à faire imploser les bulles de cavitation générées dans lesdits deuxièmes canaux ;
- de préférence, le réacteur hydrodynamique comporte plusieurs modules de réaction perfectionnés successifs de sorte que les premiers canaux d'un premier module de réaction perfectionné débouchent dans une chambre aval constituant la chambre amont d'un deuxième module de réaction perfectionné immédiatement en aval du premier module de réaction perfectionné ;
- dans un mode de réalisation, le réacteur hydrodynamique comporte un, de préférence deux, voire plus de deux modules de réaction dits « simplifiés », chaque module de réaction simplifié étant constitué de l'amont vers l'aval, par un bloc comportant des canaux au moins partiellement, de préférence totalement, délimités par du fer et conformés pour provoquer la génération de bulles de cavitation, et une chambre d'implosion disposée en aval desdits canaux et conformée pour provoquer une implosion des bulles de cavitation ;
- le boîtier délimite au moins partiellement une chambre intermédiaire et/ou contient un, de préférence tous les modules de réaction, éventuellement simplifiés ;
- le dispositif de traitement comporte une pompe de circulation entrainant le liquide à travers le microbulleur et le(s) module(s) de réaction, éventuellement simplifiés ;
- le microbulleur est disposé en aval de la pompe de circulation, à une distance de la pompe de préférence inférieure à 1 mètre, de préférence inférieure à 0,5 mètre, de préférence inférieure à 0,3 mètre, de préférence inférieure à 0,1 mètre.

Décrite est aussi une installation de traitement d'un liquide contenant un polluant organique, ladite installation comportant un circuit dans lequel sont insérés une cible et un dispositif de traitement dudit liquide sortant de ladite cible.

Une installation de utilisé dans un procédé selon l'invention peut encore comporter une ou plusieurs des caractéristiques suivantes :
- Le polluant organique est choisi dans le groupe formé par les composés organiques volatils, semi-volatils, les PCB, les pesticides, les herbicides, les dioxines, les furanes, les produits explosifs et leurs produits de dégradation, les produits humiques, les colorants ;
- Le liquide à traiter est issu de la production de pétrole ou de gaz, d'extraction minière, de fracturation hydraulique, d'un comptage ou d'un traitement d'eau, potable ou non ;
- Le liquide à traiter présente une demande chimique en oxygène (DCO) supérieure à 100 mg/l, supérieure à 1000 mg/l, supérieure à 5000 mg/l, supérieure à 50 000 mg/l, supérieure à 100 000 mg/l, voire supérieure à 300 000 mg/l ;
- Pour que le liquide à traiter puisse servir d'électrolyte entre le premier matériau conducteur électriquement et le fer, la conductivité électrique du liquide à traiter est de préférence supérieure à 300 µS/cm supérieure à 700 µS/cm supérieure à 1 mS/cm, supérieure à 100 mS/cm, voire supérieure à 300 mS/cm.
- La cible est choisie dans le groupe formé par un réservoir et un bassin ;
- Dans un mode de réalisation, le liquide circule en boucle fermée dans l'installation.

L'invention concerne un procédé de traitement d'un liquide selon la revendication 1.

### Définitions

Les « constituants oxygénés » sont les constituants contenant de l'oxygène et capables de réagir avec les cations ferreux pour former des radicaux hydroxyles.

Par « polluant organique », on entend un composé dont la molécule comporte au moins un atome de carbone et un atome d'hydrogène, et qui peuvent être décomposés sous l'action des radicaux hydroxyles.

Sauf indication contraire, le fer est sensiblement pur.

Les positions « amont » et « aval » sont déterminées par rapport au sens d'écoulement du liquide lors de son traitement.

On appelle « diamètre équivalent » d'une section d'aire A le diamètre d'une section circulaire d'aire identique A. Pour une section circulaire, le diamètre équivalent est donc égal au diamètre.

On appelle « plan transversal » un plan perpendiculaire à la direction principale d'écoulement du liquide.

Par « comportant un » ou « comprenant un », il y a lieu de comprendre « comportant au moins un », sauf indication contraire.

Les expressions « en particulier » ou « notamment » sont synonymes et ne sont pas limitatives.

### Brève description des figures

D'autres caractéristiques et avantages de l'invention apparaitront encore à la lecture de la description détaillée qui va suivre et à l'examen des dessins annexés, fournis à des fins illustratives et non limitatives. Dans ces dessins,
- la figure 1 représente schématiquement un exemple d'installation de traitement ;
- les figures 2a et 2b, 4 et 5 représentent en coupe longitudinale des exemples de réacteurs hydrodynamiques ; et
- la figure 3 représente un microbulleur.

Dans les différentes figures, des organes identiques ou analogues ont été repérés avec les mêmes références.

### Description détaillée

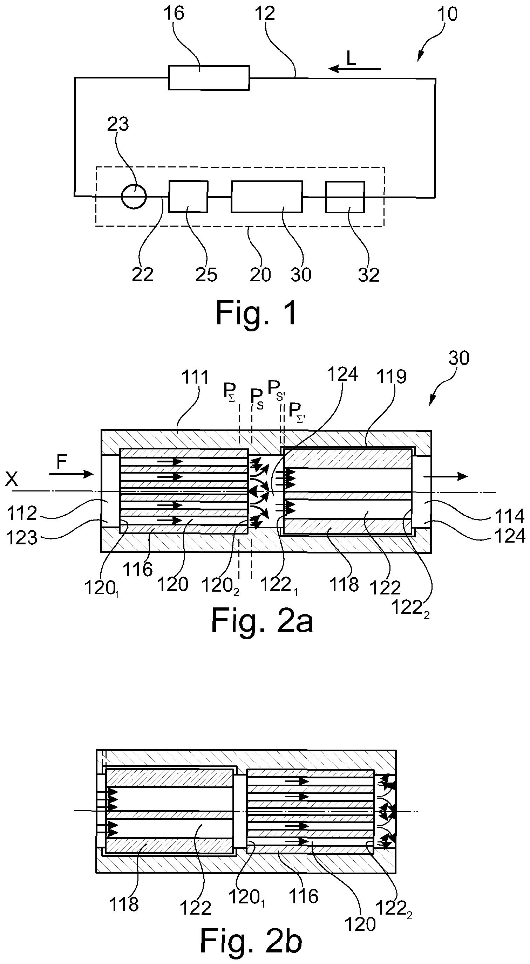

La figure 1 représente une installation 10 utilisée dans un procédé selon l'invention comportant un circuit 12 fermé dans lequel circule un liquide L. Le liquide L, de préférence aqueux, est chargé d'un polluant organique à décomposer. Le polluant organique peut en particulier être choisi dans le groupe constitué par les acétylènes, les alcools, les aldéhydes, les alcanes, les composés aromatiques, les acides carboxyliques, les alcènes, en particulier les alcènes chlorés, les cétones, les composés organiques azotés, les oléfines, les phénols, les composés organiques sulfurés, et leurs mélanges. Le liquide peut également contenir des produits médicamenteux. Une cible 16, en l'occurrence un bassin ou un réservoir d'eaux polluées, et un dispositif de traitement 20 selon l'invention sont insérés dans une conduite 22 du circuit 12.

Le circuit 12 peut être ouvert, semi-ouvert, ou fermé, comme représenté, avec ou sans appoint de liquide, avec ou sans mise en contact du liquide avec l'atmosphère.

La cible n'est pas limitée. La cible peut être notamment dans un bâtiment industriel, résidentiel ou tertiaire, par exemple un hôpital, une école ou une station d'épuration.

Le dispositif de traitement 20 comporte, depuis l'amont vers l'aval, une pompe 23, un microbulleur 25, un réacteur hydrodynamique 30, et un filtre 32.

La pompe 23 est insérée en amont ou en aval du réacteur hydrodynamique 30, de préférence en amont. Elle permet de mettre en circulation le liquide L.

La figure 2a représente schématiquement un exemple de réacteur hydrodynamique 30 servant de générateur de cavitation et de générateur de cations ferreux.

A la différence des réacteurs « sonochimiques », et en particulier ultrasoniques, un générateur de cavitation hydrodynamique est efficace non seulement pour les petits volumes de liquide traités en laboratoire, mais aussi pour des volumes élevés, comme ceux rencontrés dans l'industrie. En outre, le dispositif de traitement peut avantageusement fonctionner avec un apport d'énergie très faible.

Par ailleurs, avantageusement, la cavitation hydrodynamique peut être produite très simplement, par le passage d'un liquide à travers un étranglement tel qu'une plaque à trous, un Venturi, un orifice ou une simple vanne d'étranglement.

L'étranglement peut être également en périphérie du conduit dans lequel circule le liquide, comme dans des modes de réalisation décrits dans EP 0983116. Un étranglement périphérique peut être également obtenu au moyen d'une sphère disposée selon l'axe du conduit dans lequel circule le liquide.

Le réacteur hydrodynamique représenté, d'axe longitudinal X, comporte un boîtier 111 pourvu d'une entrée 112 et d'une sortie 114. De préférence, il comporte des raccords permettant la connexion de l'entrée et/ou de la sortie à une canalisation, par exemple une bride pourvue de trous à boulons apte à coopérer avec une bride correspondante de ladite canalisation, ou une partie mâle ou femelle à visser sur une partie femelle ou mâle, respectivement, de ladite canalisation.

Le boîtier 111 contient un premier module de réaction comportant successivement, depuis l'amont vers l'aval, un premier bloc 116, de préférence en un matériau diélectrique, une chambre intermédiaire 124 et un deuxième bloc 118 comportant, de préférence constitué par une anode en fer.

De préférence, le boîtier 111 est en un premier matériau conducteur électriquement, de préférence en inox, et est isolé électriquement du deuxième bloc 118, par exemple au moyen d'un joint élastomère 119.

Les premier et deuxième blocs sont percés longitudinalement de premiers et deuxièmes canaux, référencés 120 et 122, respectivement.

Les premiers canaux sont de préférence parallèles les uns aux autres, d'axe X. Ils peuvent être rectilignes ou non. Le nombre de premiers canaux est de préférence supérieur à 3, supérieur à 5, supérieur à 10, supérieur à 20, supérieur à 30 et/ou inférieur à 200, inférieur à 150, inférieur à 100, inférieur à 80, de préférence inférieur à 60. La section transversale des canaux peut être quelconque, par exemple circulaire. Dans un mode de réalisation, les premiers canaux présentent une section transversale sensiblement constante sur toute leur longueur.

Le diamètre intérieur équivalent des premiers canaux est de préférence supérieur à 2 mm, supérieur à 10 mm, voire supérieur à 15 mm ou supérieur à 20 mm et/ou inférieur à 50 mm, inférieur à 40 mm, inférieur à 35 mm. Un diamètre intérieur équivalent d'environ 30 mm est bien adapté.

La longueur des premiers canaux est de préférence supérieure à 20 mm, supérieure à 30 mm et/ou inférieure à 50 mm, de préférence inférieure à 40 mm.

Le matériau diélectrique est de préférence un plastique, par exemple du polytétrafluoroéthylène (PTFE), du nylon, du polypropylène, du polychlorure de vinyle (PVC) ou un mélange de ces matériaux. D'autres matériaux diélectriques, par exemple céramiques, peuvent également être utilisés. De préférence, ces matériaux sont choisis pour générer, par la circulation du liquide, une charge électrique statique par tribo-électrisation. Le PTFE est le matériau diélectrique préféré. Ce matériau diélectrique évite en effet à la matière solide du liquide d'adhérer à la surface du matériau diélectrique.

Les deuxièmes canaux peuvent être rectilignes ou non. En particulier, ils peuvent s'étendre suivant l'axe longitudinal du dispositif. Le nombre de deuxièmes canaux est de préférence supérieur à 2, supérieur à 3, supérieur à 5, supérieur à 10, supérieur à 20, supérieur à 30 et/ou inférieur à 100, inférieur à 80, inférieur à 60. La section transversale des deuxièmes canaux peut être quelconque, par exemple circulaire. Dans un mode de réalisation, les deuxièmes canaux présentent une section transversale sensiblement constante sur toute leur longueur.

Le diamètre intérieur équivalent des deuxièmes canaux est de préférence supérieur à 2 mm, supérieur à 4 mm, voire supérieur à 5 mm et/ou inférieur à 15 mm, inférieur à 13 mm, inférieur à 10 mm, inférieur à 8 mm, voire inférieur à 7 mm.

Dans un mode de réalisation, le diamètre intérieur équivalent des deuxièmes canaux est supérieur, voire 1,1, 1,5, 2, ou 3 fois supérieur à celui des premiers canaux.

La longueur des deuxièmes canaux est de préférence supérieure à 20 mm, supérieure à 30 mm et/ou inférieure à 50 mm, inférieure à 40 mm.

Les deuxièmes canaux sont délimités par une paroi intérieure en fer, disposée le long du trajet du liquide de manière à créer, par effet galvanique, par exemple avec le premier matériau conducteur électriquement du boîtier, des phénomènes d'oxydoréduction permettant de générer des cations ferreux permettant, par réaction avec des constituants oxygénés présents dans le liquide, de générer des radicaux hydroxyles. L'homme du métier sait déterminer des couples de matériaux permettant d'obtenir un tel effet galvanique.

De préférence encore, le deuxième bloc est constitué en ledit fer. De préférence, il constitue une anode sacrificielle qui, de préférence, peut être remplacée.

Les premiers canaux débouchent en amont, vers l'entrée 112, dans la chambre amont 123, par des ouvertures « amont » 120₁ et optionnellement, en aval, dans une chambre intermédiaire 124, de préférence cylindrique, par des ouvertures « aval » 120₂.

La chambre amont et/ou la chambre intermédiaire sont de préférence communes à plusieurs premiers canaux, voire communes à l'ensemble des premiers canaux.

De préférence, les premiers canaux ne débouchent pas en regard des deuxièmes canaux, ce qui interdit au liquide sortant d'un premier canal et ayant traversé la chambre intermédiaire d'entrer dans un deuxième canal en suivant un chemin rectiligne.

Les deuxièmes canaux 122 (de préférence tous les deuxièmes canaux) débouchent en amont dans la chambre intermédiaire 124, par des ouvertures « amont » 122₁, et vers l'aval, vers la sortie 114, dans une chambre aval 125 par des ouvertures « aval » 122₂.

De préférence, la chambre amont et/ou la chambre intermédiaire et/ou la chambre aval ne sont pas délimitées par du fer susceptible de créer, par effet galvanique, par exemple avec le premier matériau conducteur électriquement du boîtier, des phénomènes d'oxydoréduction. Une ou plusieurs d'entre elles peu(ven)t être en particulier délimitée(s) par le boîtier.

Le diamètre de la chambre amont 123 et/ou de la chambre intermédiaire 124 et/ou de la chambre aval peut être par exemple de 270 mm.

De préférence, la longueur de la chambre amont et/ou de la chambre intermédiaire et/ou de la chambre aval, mesurée selon la direction de l'écoulement, et dans le système de coordonnées réduites d'EULER, est supérieure à 0,5*L₁ et/ou inférieure à 2*0,5*L₁, L₁ étant la longueur desdits canaux en aval de la chambre considérée.

De préférence, la chambre amont et/ou la chambre intermédiaire et/ou la chambre aval présentent un volume supérieur à 0,0001 dm³, supérieur à 0,001 dm³, supérieur 0,01 dm³, supérieur à 0,1 dm³ et/ou inférieur à 20 dm³, inférieur à 10 dm³, inférieur à 1 dm³.

Le rapport S/∑ peut être supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300,
- S désignant la section de la chambre considérée (la chambre intermédiaire ou chambre aval), mesurée dans un plan transversal immédiatement en aval de la région dans laquelle les canaux en amont de ladite chambre débouchent dans ladite chambre ;
- ∑ désignant la somme des sections transversales desdits canaux mesurées dans un plan transversal immédiatement en amont de la région dans laquelle ils débouchent dans ladite chambre.

Un rapport de S/∑ élevé permet avantageusement la création d'une contre pression significative à l'embouchure desdits canaux, très efficace pour supprimer les bulles de cavitation générées dans lesdits canaux.

Pour calculer le rapport S/∑, on prend en considération tous les canaux qui débouchent dans ladite chambre, en amont de ladite chambre.

Le rapport S'/∑',
- S' désignant la section de la chambre considérée (chambre amont ou chambre intermédiaire), mesurée dans un plan transversal P_{S}' immédiatement en amont des ouvertures « amont » des canaux qui débouchent dans ladite chambre, en amont de ladite chambre ;
- ∑' désignant la somme des sections transversales desdits canaux mesurées dans un plan transversal P_{∑}' immédiatement en aval de ces ouvertures « amont »,
est de préférence supérieur à 2, supérieur à 5, supérieur à 10, supérieur à 20, supérieur à 50, supérieur à 100, voire supérieur à 200 et/ou inférieur à 1000, inférieur à 500, inférieur à 400, voire inférieur à 300.

Un rapport de S'/∑' élevé permet avantageusement une accélération brutale du liquide dans lesdits canaux, ce qui est très efficace pour générer de la cavitation.

La chambre intermédiaire 124 étant de section transversale constante, S'=S.

Pour calculer le rapport S'/∑', on prend en considération tous les canaux concernés.

Si le réacteur hydrodynamique comporte plusieurs modules de réaction, toutes les chambres du réacteur hydrodynamique peuvent présenter un rapport S/∑ et/ou S'/∑' sensiblement identique.

Le réacteur hydrodynamique constitue un générateur de cavitation car il permet une réduction de la section de passage du liquide capable de produire une forte turbulence et une chute très brutale de la pression dans le liquide et ainsi créer, par cavitation, des bulles, en particulier par accroissement du diamètre des microbulles injectées, mais aussi, de préférence, de nouvelles bulles. Pour créer de la cavitation, les réacteurs hydrodynamiques décrits dans le brevet EP-B2-680 457, dans WO 2011 033476, dans EP 0983116 ou dans la demande française déposée sous le numéro 13 50513, peuvent être envisagés.

Le réacteur hydrodynamique constitue également un générateur de cations ferreux et de radicaux hydroxyles car, grâce à son anode en fer, il peut générer des cations ferreux aptes à réagir avec un constituant oxygéné pour créer des radicaux hydroxyles.

Le dispositif de traitement comporte également un dispositif d'injection, dans le liquide L, d'un fluide oxygéné destiné à réagir avec les cations ferreux pour générer des radicaux hydroxyles.

Le fluide oxygéné est de préférence de l'air et/ou de l'oxygène et/ou de l'ozone, et/ou une solution aqueuse de peroxyde d'hydrogène.

De préférence, le liquide est accéléré en amont de l'injection, par exemple au moyen d'un diaphragme 156, la réduction de la section de passage étant adaptée pour assurer, par effet Venturi, un débit d'injection adapté.

De préférence, le dispositif d'injection est disposé en aval de la pompe 23, à une distance du réacteur hydrodynamique de préférence inférieure à 1 mètre, de préférence inférieure à 0,5 mètre, de préférence inférieure à 0,3 mètre, de préférence inférieure à 0,1 mètre. De préférence, il est disposé immédiatement en amont du réacteur hydrodynamique.

Le dispositif d'injection peut notamment prendre la forme d'un microbulleur 25, de préférence disposé en amont du réacteur hydrodynamique. Le microbulleur 25 peut être intégré dans le boîtier 11 ou non.

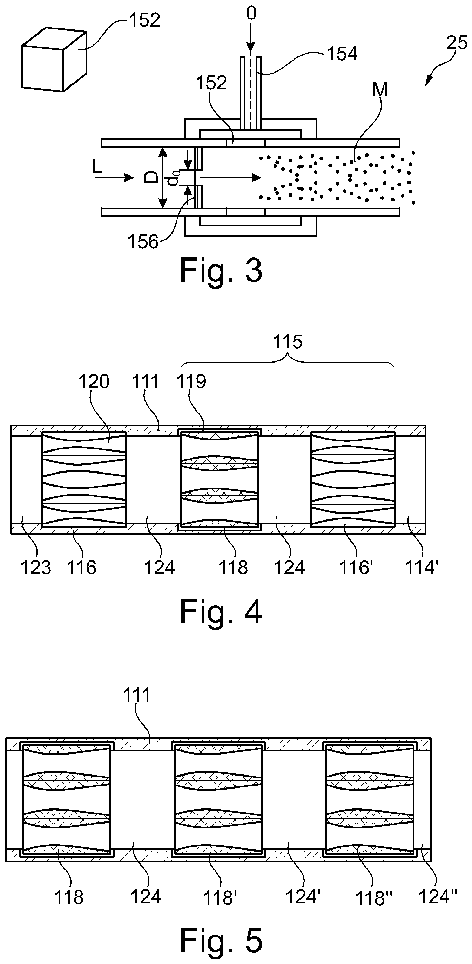

Comme représenté sur la figure 3, le microbulleur peut comporter un bloc poreux 152, par exemple fritté, par exemple en alliage cuivreux ou en acier inoxydable et un injecteur 154, le bloc poreux étant en contact avec le liquide L et l'injecteur 152 étant agencé pour autoriser une injection d'un gaz oxygéné O dans le circuit 12. La porosité est de préférence déterminée pour dimensionner les microbulles M injectées pour qu'elles présentent un diamètre inférieur à 100 µm, de préférence inférieur à 75 µm, et/ou de préférence supérieur à 25 µm, de préférence supérieur à 50 µm.

Un dispositif de traitement selon l'invention peut encore comporter des moyens pour séparer les particules en suspension, par exemple des moyens de décantation ou un filtre 32, de préférence disposés en aval du réacteur hydrodynamique. La filtration permet d'éliminer les produits issus de minéralisation et/ou de l'oxydation avancée. Elle améliore la qualité des liquides, et ainsi protège les équipements et limite les risques d'entartrage, d'embouage et de corrosion, ainsi que la bio-prolifération des micro-organismes comme les algues ou les bactéries.

Le filtre peut être en particulier choisi dans le groupe formé par un filtre à brosse, un filtre à disques, un filtre à média granulaire, une membrane d'ultrafiltration, une membrane de nanofiltration, notamment seule ou en aval d'une membrane d'ultrafiltration, un filtre à cartouche, un filtre à poche, un filtre à tamis et une membrane par osmose inverse.

### Fonctionnement

Le fonctionnement de l'installation décrite ci-dessus est le suivant :
Le liquide L est entrainé par la pompe 23 dans le circuit 12.

En sortie de pompe, il est chargé en microbulles de fluide oxygéné par le microbulleur 25. Dans un mode de réalisation, seul de l'air est injecté par le microbulleur 25. Avantageusement, l'injection de fluide oxygéné augmente considérablement la génération de radicaux hydroxyles.

Le liquide L pénètre dans le boîtier 11 dans lequel son écoulement est modifié afin de créer un écoulement turbulent susceptible de créer localement de la cavitation.

Plus précisément, le liquide à traiter pénètre dans le boîtier 11 par l'entrée 112 (flèche F représentée sur la figure 2a) et la chambre amont 123.

Le liquide transite alors par les premiers canaux 120 ménagés dans le premier bloc 116. L'entrée dans les premiers canaux s'accompagne d'une accélération brutale du liquide et d'une diminution de la pression qui conduisent à l'apparition de cavitation. Les conditions opératoires (débit, pression) sont déterminées pour que la détente provoque de la cavitation. Avec un réacteur hydrodynamique IONSCALE BUSTER®, la vitesse du liquide en entrée du réacteur hydrodynamique (dans la chambre amont 123) est de préférence supérieure à 2 m/s et/ou inférieure à 15/ms, inférieure à 12 m/s, inférieure à 10 m/s, inférieure à 8 m/s, voire inférieure à 6 m/s, voire inférieure à 4 m/s, et la pression en entrée du réacteur hydrodynamique est de préférence supérieure à 1 bar et/ou inférieure à 20 bar, inférieure à 10 bar, voire inférieure à 5 bar.

Le livre "CAVITATION AND BUBBLE DYNAMICS" de Christopher Earls Brennen aux éditions Oxoford University Press, 1995 décrit les conditions permettant d'obtenir de la cavitation hydrodynamique. La cavitation dépend de nombreux facteurs dont les principaux sont :
- la tension du ou des gaz dissous dans le liquide ;
- la nature et les caractéristiques physico-chimiques du ou des gaz présents dans le liquide ;
- la température du liquide ;
- la pression du liquide ;
- la géométrie du réacteur hydrodynamique ;
- le débit ou la vitesse de passage du liquide.

La cavitation conduit à la formation de bulles de cavitation, remplies de gaz, à l'intérieur du liquide et/ou sur la couche en limite des parois du réacteur hydrodynamique.

De préférence, le générateur de cavitation est configuré pour générer des bulles présentant, pour plus de 50% en nombre, un diamètre compris entre 25 µm et 2 mm. Avantageusement, les conditions mécaniques et thermodynamiques locales très intenses générées par la cavitation conduisent également à une destruction de certains micro-organismes, pathogènes ou non, qui pourraient être présents au sein du liquide.

Dans les premiers canaux, le liquide frotte sur le matériau diélectrique. Le frottement du liquide sur le matériau diélectrique provoque l'accumulation de charges électrostatiques à la surface dudit matériau diélectrique, générant ainsi un champ électrostatique local capable de favoriser les réactions suivantes :
- précipitation physico-chimique de certains ions tels que certains oxydes métalliques, les carbonates, les sulfates, ou les phosphates ;
- coagulation de certaines particules colloïdales.

Grâce à la présence de l'effet électrostatique généré par le matériau diélectrique et à la coagulation des particules colloïdales qui en résulte, la taille des agglomérats de particules colloïdales peut atteindre une taille suffisante pour qu'ils soient retenus efficacement et économiquement dans un filtre.

Le fluide diphasique débouche alors dans la chambre intermédiaire 124, qui constitue une chambre d'implosion. En effet, l'entrée dans la chambre intermédiaire 124 conduit à une diminution de la vitesse, à une augmentation brutale de la pression, et à une condensation à l'intérieur des bulles de cavitation, ce qui provoque l'implosion d'une majorité des bulles de cavitation.

Ces implosions très brusques ont pour résultat la formation d'ondes de choc qui génèrent à leur tour des phénomènes physico-chimiques ou thermodynamiques et mécaniques, comme l'éclatement de toute matière se trouvant près des bulles qui implosent.

Ainsi, au cours de la dislocation des bulles de cavitation, de très hautes pressions et des températures locales très élevées sont atteintes : La température au sein des bulles peut ainsi atteindre des valeurs de l'ordre de 5000°C et la pression atteindre des valeurs de l'ordre de 500 kg/cm² (K.S. Suslick, Science, Vol. 247, 23 Mars 1990, p. 1439-1445).

Par ailleurs, un processus d'émulsionnement, d'homogénéisation et de dispersion peut être obtenu grâce à l'énergie cinétique générée par les implosions des bulles de cavitation.

Ces conditions de température et de pression activent, à l'intérieur d'une bulle ou dans le liquide au voisinage de ladite bulle, des réactions physico-chimiques et thermodynamiques, en particulier la production de radicaux hydroxyles et la précipitation de sels inorganiques, et en particulier des carbonates, sulfates et phosphates.

Les conditions hydrodynamiques régnant dans la chambre intermédiaire 124 contribuent également à la coagulation en assurant un brassage élevé du liquide. Il est donc particulièrement avantageux que la chambre intermédiaire soit en aval du matériau diélectrique, qui initie la coagulation.

La chambre intermédiaire 124 sépare les ouvertures « aval » des premiers canaux des ouvertures « amont » des deuxièmes canaux.

Le liquide sortant de la chambre intermédiaire 124 pénètre ainsi dans les deuxièmes canaux 122 du deuxième bloc 118. De préférence, les deuxièmes canaux ne sont cependant pas alignés axialement avec les premiers canaux afin de favoriser la turbulence et la précipitation ultérieure.

La pénétration du liquide dans les deuxièmes canaux 122 conduit à une accélération brutale de sa vitesse. La région de transition entre la chambre intermédiaire 124 et les deuxièmes canaux 122 constitue donc une région d'accélération de l'écoulement, et de préférence d'apparition de cavitation.

L'effet de « pile » type « Daniell » généré par le couple électro-galvanique Fer-graphite ou Fer-acier inoxydable provoque une libération de cations ferreux Fe²⁺ au sein du liquide, du fait de la réaction électrolytique qui s'établit spontanément entre l'anode de fer et les métaux moins réducteurs de l'installation, en l'occurrence le graphite, le graphène, ou l'acier inoxydable constituant le boîtier.

De manière surprenante également, les conditions créées par l'implosion des bulles de cavitation augmentent la génération de radicaux hydroxyles, c'est-à-dire l'efficacité de la réaction des cations ferreux avec le constituant oxygéné. Il est donc avantageux que l'implosion des bulles de cavitation soit effectuée dans une région dans laquelle les cations ferreux réagissent avec le constituant oxygéné.

Les inventeurs ont constaté que les implosions dans la chambre intermédiaire ont un effet sur la génération de radicaux hydroxyles, bien que la chambre intermédiaire soit en amont des deuxièmes canaux dans lesquels sont générés les cations ferreux.

L'efficacité du dispositif de traitement permet ainsi d'obtenir des réactions du type Fenton avec un ajout limité de peroxyde d'hydrogène, voire sans ajout de peroxyde d'hydrogène, généralement considéré comme néfaste pour la santé et l'environnement.

En outre, les cations ferreux peuvent être avantageusement générés sans apport d'énergie électrique. Dans un mode de réalisation, le dispositif comporte cependant un générateur électrique capable d'ajouter des cations ferreux dans le liquide. L'efficacité du traitement en est améliorée.

Les radicaux hydroxyles, très réactifs, réagissent alors avec les molécules des composés organiques pour les dissocier, et ainsi réduire la pollution.

Dans un mode de réalisation, une installation utilisé dans un procédé selon l'invention comporte, en aval, amont ou en dérivation du dispositif de utilisé dans un procédé selon l'invention, une unité de traitement biologique afin de réduire plus encore la pollution.

A la sortie du deuxième bloc 118, le liquide pénètre dans la chambre aval 125, ce qui permet à nouveau de faire imploser les bulles de cavitation.

Après être sorti du réacteur hydrodynamique, le liquide traverse le filtre 32, ce qui permet de retenir, au moins en partie, les particules minéralisées par l'oxydation avancée réalisée dans le réacteur hydrodynamique et d'autres polluants particulaires qui pourraient être néfastes pour l'installation. Le liquide poursuit ensuite son trajet vers la cible 16.

Le dispositif de traitement représenté sur la figure 2a est bien adapté lorsque le liquide à traiter peut le traverser plusieurs fois. Le liquide entrant dans les premiers canaux est alors avantageusement chargé de cations ferreux.

Le dispositif de traitement représenté sur la figure 2b est un module de traitement perfectionné qui est une variante du dispositif de traitement représenté sur la figure 2a dans laquelle les premier et deuxième blocs sont inversés. Ce mode de réalisation est préféré car dès le premier passage du liquide, le liquide entrant dans le premier bloc pour subir la cavitation est déjà chargé en cations ferreux.

Le dispositif de traitement peut être utilisé dans toutes les applications dans lesquelles un liquide comporte un polluant organique, et en particulier dans les applications susmentionnées ou décrites dans les brevets et demandes de brevet susmentionnées.

Comme cela apparaît clairement à présent, l'invention fournit une solution de traitement en limitant le recours aux additifs chimiques, et en particulier le peroxyde d'hydrogène, le sulfate de fer et/ou la limaille de fer classiquement introduite dans les procédés Fenton. Cette solution est applicable sur une large plage de pH du liquide à traiter et s'est avérée particulièrement efficace.

En particulier, le boîtier 111 pourrait contenir plusieurs modules de réaction perfectionnés, la chambre aval d'un premier module de réaction perfectionné correspondant à la chambre amont d'un deuxième module de réaction perfectionné, disposé immédiatement en aval du premier module de réaction perfectionné.

La figure 4 représente un mode de réalisation particulièrement avantageux. Suivant ce mode de réalisation, le boîtier 111 comporte un module de réaction perfectionné 115 comportant un deuxième bloc 118 et, en aval du deuxième bloc 118, un premier bloc 116', de préférence sensiblement identique au premier bloc 116. La chambre intermédiaire 124 sert de chambre amont pour le premier bloc 116'. En aval du premier bloc 116', le réacteur hydrodynamique comporte une chambre aval 114'.

Dans ce mode de réalisation, les premiers canaux et les deuxièmes canaux présentent une section longitudinale convergente, puis divergente, particulièrement efficace.

Ce mode de réalisation illustre également que le nombre de deuxièmes blocs peut être différent du nombre de premiers blocs.

La figure 5 illustre une autre variante d'un réacteur hydrodynamique. Ce réacteur comporte trois modules de réaction simplifiés, chaque module de réaction simplifié comportant un deuxième bloc en fer, référencé 118, 118' et 118", les deuxièmes canaux étant conformés pour créer de la cavitation, et une chambre intermédiaire référencée 124, 124' et 124", respectivement, constituant une chambre d'implosion des bulles de cavitation créées dans lesdits deuxièmes canaux.

Bien entendu, la présente invention n'est cependant pas limitée aux modes de réalisation décrits et représentés.

En particulier, le liquide traité peut comporter plusieurs phases liquide, voire comporter des particules solides en suspension.

En outre, le nombre ou la forme des premiers canaux peuvent être différents de ceux des deuxièmes canaux, le nombre de premiers blocs peut être identique ou différent du nombre de deuxièmes blocs et le nombre et la forme des chambres peuvent être divers.

Les deuxièmes canaux peuvent constituer des chambres d'implosion. Dans un mode de réalisation, le liquide sortant des premiers canaux entre directement dans les deuxièmes canaux, sans transiter par une chambre intermédiaire. Cependant, la présence de la chambre intermédiaire est préférable car elle favorise l'implosion des bulles de cavitation. De préférence, l'entrée dans les deuxièmes canaux conduit à une décompression (résultant de la réduction de la section de passage). De préférence, cette décompression suffit à la production des bulles de cavitation, avantageusement à l'endroit même où sont générés les cations ferreux.

Les premiers canaux ne sont pas nécessairement en un matériau diélectrique. Dans un mode de réalisation, les premiers canaux sont délimités intérieurement, au moins partiellement, de préférence totalement, par du fer.

### Nouveaux développements

Un exemple d'utilisation de la cavitation hydrodynamique est présenté dans le travail de : Pandit A.B., Moholkar V.S., paru dans les pages du « Chemical Engineering Progress », juillet 1996, p. 57-69. Les inventeurs ont cependant constaté que les régimes de cavitation hydrodynamique ne sont pas optimaux. En particulier, l'intensité des réactions chimiques en est réduite, et l'échauffement du milieu augmenté.

La poursuite des recherches les a conduits à de nouveaux perfectionnements. Décrit est aussi un dispositif de traitement d'un liquide comportant un polluant organique, ledit dispositif étant utilisable dans un procédé selon la revendication 1.

Le dispositif d'injection est apte à introduire, dans le liquide, des microbulles d'un fluide oxygéné présentant un diamètre inférieur à 120 µm, de préférence inférieur à 100 µm et, de préférence, supérieur à 25 µm, de préférence supérieur à 40 µm, de préférence supérieur à 50 µm. Notamment dans ce mode de réalisation perfectionné, un dispositif de traitement peut encore comporter une ou plusieurs des caractéristiques optionnelles suivantes :
- le dispositif d'injection est configuré de manière que
   - les microbulles présentent, en moyenne arithmétique, un diamètre inférieur à 100 µm, et/ou de préférence supérieur à 40 µm, et/ou
   - plus de 80% en nombre des microbulles injectées présentent un diamètre compris entre 40 µm et 120 µm, et/ou
   - la différence entre la taille maximale des microbulles injectées et la taille minimale des microbulles injectées est inférieure à 20 µm ;
- l'injecteur de microbulles et la vanne de régulation de pression sont réglés de manière que le rayon maximal des bulles de cavitation est inférieur à 0,9 fois le rayon critique des bulles de cavitation ;
- le générateur de cavitation est un réacteur hydrodynamique et/ou le générateur de cations ferreux est une pile de type « Daniell » entre du fer et un premier matériau conducteur électriquement présentant un potentiel d'électrodes supérieur au fer ;
- la cathode de ladite pile comporte du graphite.

Le dispositif de traitement du mode de réalisation perfectionné peut bien entendu comporter une ou plusieurs des caractéristiques décrites dans la partie de la présente description qui précède le titre « nouveaux développements ».

Lors des nouveaux développements, les inventeurs ont en particulier découvert qu'une oscillation des bulles sortant du générateur de cavitation favorise la génération de radicaux hydroxyles. Ils ont ensuite recherché quels paramètres pouvaient optimiser l'effet positif de cette oscillation, et s'il existait des relations entre ces paramètres.

Les inventeurs ont d'abord découvert l'intérêt d'injecter des microbulles calibrées.

De préférence, les microbulles injectées ont une taille médiane inférieure à 100 µm, de préférence inférieure à 70 µm, de préférence inférieure à 50 µm, de préférence inférieure à 40 µm, de préférence inférieure à 30 µm. A cet effet, il est préférable que le dispositif d'injection comporte un microbulleur comportant un bloc poreux de porosité adaptée. L'injection de microbulles favorise considérablement la génération de bulles plus grosses dans le générateur de cavitation, ce qui augmente la durée d'oscillation de ces bulles, et donc leur efficacité pour générer des radicaux hydroxyles.

De préférence, plus de 80%, plus de 90%, plus de 95%, voire sensiblement 100% en nombre des microbulles injectées présentent un diamètre supérieur à 25 µm, de préférence compris entre 40 µm et 120 µm, de préférence compris entre 50 µm et 100 µm.

De préférence, le diamètre des microbulles injectées est sensiblement constant. De préférence, la différence entre la taille maximale des microbulles injectées et la taille minimale des microbulles injectées est inférieure à 30 µm, de préférence inférieure à 20 µm.

Par ailleurs, les inventeurs ont observé qu'un générateur de cavitation hydrodynamique permet une oscillation des bulles à une fréquence plus efficace que celle obtenue avec des réacteurs « sonochimiques ».

Les études ont également démontré qu'un générateur de cations ferreux Fe²⁺ mettant en oeuvre un procédé Fenton, ci-après « générateur Fenton », était particulièrement bien adapté.

De préférence le générateur Fenton comporte une anode sacrificielle de fer et, de préférence, une cathode de graphite ou comportant du graphène, voire constituée de graphène.

Le générateur Fenton est de préférence un générateur dit « galvano Fenton », fonctionnant de manière passive, sans injection de courant, à la différence d'un générateur dit « électro Fenton » nécessitant une injection de courant électrique au moyen d'un générateur électrique.

Dans un générateur galvano Fenton préféré, la réaction de réduction électrochimique à la cathode graphite (O₂ + 2 H+ + 2e⁻ → H₂O₂) génère, de manière continue et *in situ,* du peroxyde d'hydrogène (agent oxydant), tandis que les réactions d'oxydation à l'anode de fer (Fe → Fe²⁺ + 2e⁻ et Fe → Fe³⁺ + 3e⁻) produit les agents coagulants (Fe²⁺/Fe³⁺).

Les agents coagulant favorisent la décantation des polluants.

La présence des ions Fe²⁺ permet de générer des radicaux hydroxyles (OH^{∘}) par une réaction de Fenton. Les radicaux hydroxyles, présentant un potentiel d'oxydation très élevé, réagissent rapidement avec la plupart des polluants organiques présents dans le liquide traité.

Pour optimiser l'oscillation des bulles, il est nécessaire que le dispositif de traitement comporte, en aval du générateur de cavitation, de préférence à une distance inférieure à 2 m, de préférence inférieure à 1 m du générateur de cavitation, une vanne de régulation de pression, dite « vanne de contre-pression ». Par « une vanne de régulation de pression », on entend tout dispositif permettant de modifier la pression dans le générateur de cavitation, et autorisant de préférence un réglage continu.

La vanne de régulation de pression est réglée de manière à faire osciller les bulles en aval du générateur de cavitation, c'est-à-dire de manière que leur rayon varie périodiquement. Les inventeurs ont découvert que plus l'oscillation des bulles est prolongée, meilleure est l'efficacité du traitement. De préférence, l'amplitude de l'oscillation est maximisée.

De préférence, la vanne de régulation de pression est pilotée hydrauliquement.

L'équation de Rayleigh - Plesset et le modèle de Van Wijngaarden, bien connus de l'homme de l'art, permettent de modéliser cette oscillation et donc de déterminer les paramètres permettant de l'optimiser.

Le dispositif d'injection de microbulles et la vanne de régulation de pression sont réglées de manière à ce que le rayon maximal des bulles de cavitation obtenues soit inférieur au rayon critique Rc des bulles en sortie du générateur de cavitation, de préférence inférieur à 0,9*Rc.

Les inventeurs ont découvert que le respect de cette condition permet d'optimiser les réactions chimiques des procédés d'oxydation avancée qui se produisent à chaque fois que le rayon d'une bulle diminue. Le dispositif de traitement est ainsi beaucoup plus efficace qu'un dispositif dans lequel l'implosion des bulles est brutale, par exemple par contact avec un obstacle.

Rc est le rayon à partir duquel une bulle n'implose plus et continue à croître. Rc = (σ / 2 αₛ)^{1/3},
- αₛ désignant le taux de vide dans le milieu (liquide+gaz), c'est-à-dire le rapport entre le volume de gaz dans le milieu et le volume du milieu, en aval du dispositif d'injection et en amont du générateur de cavitation, de préférence immédiatement en aval du dispositif d'injection, et
- σ désignant le nombre de cavitation de l'écoulement.

Rc, αₛ et σ sont des paramètres bien connus de l'homme de l'art, qu'il contrôle parfaitement.

Pour un débit d'injection déterminé, il est possible d'évaluer, par mesure ou modélisation, si les conditions de traitement vont conduire à une implosion ou non des bulles. En agissant sur la vanne de régulation de pression, il est ainsi possible de déterminer le rayon critique.

Le taux de vide αₛ est le pourcentage du volume de milieu occupé par des microbulles. Il correspond ainsi à la quantité de fluide oxygéné injecté rapporté au débit du liquide L à traiter. Il est fonction, lorsque le diamètre des microbulles est fixé, du nombre de microbulles par unité de volume de liquide. Pour modifier le taux de vide, il suffit donc d'augmenter ou de diminuer le débit de fluide oxygéné injecté.

Enfin, le nombre de cavitation de l'écoulement σ est égal à (Ps - Pv) / (0,5.p.Us),
- Ps désignant la pression du liquide L en amont du générateur de cavitation, et pouvant être modifié en agissant sur la valve de régulation de pression, en Pa ;
- Pv désignant la pression de vapeur du liquide L, à 15°C, en Pa,
- Us désignant la vitesse du liquide L mesurée immédiatement en amont du générateur de cavitation (ou du générateur de cavitation le plus en amont si le dispositif de traitement comporte plusieurs générateurs de cavitation), de préférence à moins de 50 cm, de préférence mesurée à moins de 10 cm en amont dudit générateur de cavitation, classiquement mesurée dans la canalisation dans laquelle le dispositif de traitement est inséré ;
- ρ désignant la densité du liquide en kg/m³.

Pour modifier le nombre de cavitation, il suffit donc de modifier le réglage de la vanne de régulation de pression.

On connaît de EP 0983116 (ou US 5 937 906) un appareil de cavitation hydrodynamique qui pourrait être utilisé comme générateur de cavitation dans un dispositif selon la présente invention, sous réserve d'être ajusté spécifiquement, pour favoriser l'oscillation des bulles. Selon ce document, la dislocation préférée semble être « instantanée », ce que les conditions préconisées ci-dessus permettent d'éviter.

Les essais suivants illustrent les performances obtenues avec un dispositif présentant les nouveaux perfectionnements. Ces essais ont été effectués dans les mêmes conditions d'écoulement, avec les mêmes paramètres d'injection de microbulles. Dans les deux essais, des microbulles d'air ont été injectées.

Dans les deux essais, le dispositif comportait le même dispositif d'injection de microbulles, le même générateur de cavitation, et la même chambre d'implosion des bulles sortant du générateur de cavitation. Dans le deuxième essai, le dispositif comportait également un générateur de cations ferreux Fe²⁺, sous la forme d'un galvano Fenton à anodes en Fer et corps en graphite, à la différence du dispositif utilisé pour le premier essai.

La densité ρ du liquide L (eau chargée de p-nitrophénol) était de 1000 kg/m³.

La vitesse du liquide L mesurée immédiatement en amont du générateur de cavitation, Us, était de 10 m/s.

Le taux de vide αₛ (pourcentage du volume de milieu occupé par des microbulles) à l'injection était de 0,47 %.

Le rayon des microbulles injectées était de 50 µm.

Le nombre de cavitation σ était de 0,75.

Le générateur de cavitation présentait un venturi dont le ratio était de 0,5.

Le tableau suivant fournit la concentration en radicaux hydroxyles OH^{∘} générés, en fonction de la différence entre la pression du liquide L en amont du générateur de cavitation Ps et la pression de vapeur Pv, dans les conditions de fonctionnement du générateur de cavitation.

La concentration en OH^{∘} a été évalué par le taux de dégradation de p-nitrophénol PNP, avec l'hypothèse que tous les radicaux OH^{∘} sont utilisés à cet effet, les réactions de N₂ étant négligées.

| Ps-Pv (MPa) | Concentration OH° (mmol/L) sans anode | Concentration OH° (mmol/L) avec Fenton Fe/Graphite | Facteur multiplicateur |
|---|---|---|---|
| 0,1 | 0,153 | 0,510 | x 3,3 |
| 0,2 | 0,158 | 0,606 | x 3,8 |
| 0,3 | 0,216 | 1,029 | x 4,8 |
| 0,4 | 0,302 | 2,014 | x 6,7 |
| 0,5 | 0,291 | 1,532 | x 5,3 |
| 0,6 | 0,212 | 0,885 | x 4,2 |
| 0,7 | 0,148 | 0,494 | x 3,3 |
| 0,8 | 0,111 | 0,370 | x 3,3 |
| 0,9 | 0,088 | 0,295 | x 3,3 |

En utilisant le procédé de l'invention, le dispositif arrive à présenter un pouvoir d'oxydation remarquable, supérieur d'un facteur compris entre 3 et 6 par rapport à celui d'un procédé utilisant un dispositif dépourvu de générateur Fenton, qui lui-même présente des performances améliorées si on le compare à un procédé utilisant un dispositif dépourvu de dispositif d'injection de microbulles.

Sans être limités par cette théorie, les inventeurs expliquent les résultats obtenus de la manière suivante :
Sous atmosphère d'oxygène, le phénomène de cavitation de l'eau conduit à la formation de radicaux hydroxyles HO•, et de peroxyde d'hydrogène H₂O₂.

Le mécanisme comporte une première étape de décomposition homolytique des molécules d'eau et d'oxygène dans les bulles de cavitation sous l'effet des hautes températures développées. Les radicaux HO•, H• et HOO• ainsi que les atomes d'oxygène (O) sont alors formés :

H₂O → H• + HO• (I.1)

O₂ → 2O (I.2)

HO• + O → HOO• (I.3)

O + H₂O → 2HO• (I.4)

La capture des radicaux H• par les atomes et les molécules d'oxygène dans la bulle et à la surface mène à une augmentation de la concentration des radicaux HO• et HOO• :

H• + O → HO• (I.5)

H• + O₂ → HOO• (I.6)

H• + H₂O → HO• + H₂ (I.7)

La majorité de ces radicaux va se combiner en phase gazeuse, c'est-à-dire à l'intérieur de la bulle, pour reformer l'eau, l'oxygène et les atomes d'oxygène :

H• + OH• → H₂O (I.8)

20H• ↔ O + H₂O (I.9)

2O → O₂ (I.10)

HO• + HOO• → O₂ + H₂O (I.11)

Les inventeurs ont estimé qu'environ 10% des radicaux hydroxyles formés diffusent vers le liquide et environ 90% des radicaux hydroxyles formés se combinent à l'interface des bulles de cavitation pour former H₂ et H₂O₂ suivant les réactions suivantes :

H• + H• → H₂ (I.12)

HO• + HO• → H₂O₂ (I.13)

2HOO• → H₂O₂ + O₂ (I.14)

2HO• + 2O → O₂ + H₂O₂ (I.15)

La présence du générateur de cations ferreux Fe²⁺ exploite le produit de ces réactions hydroxyles pour générer une grande quantité de nouveaux radicaux hydroxyles, dits « secondaires », ce qui permet de démultiplier l'efficacité du traitement. Avantageusement, le générateur de cations ferreux Fe²⁺ permet également de produire des coagulants Fe²⁺/Fe³⁺.

Comme cela apparaît clairement à présent, l'invention propose ainsi une combinaison de trois éléments, à savoir :
- un injecteur de microbulles,
- un générateur de cavitation, et
- un générateur de cations ferreux Fe²⁺.

Ces trois éléments, disposés successivement depuis l'amont vers l'aval, coopèrent de manière étroite pour un résultat commun, à savoir la génération d'un grand nombre de radicaux hydroxyles, et finalement une efficacité de traitement maximale.

Plus précisément, l'injection de microbulles permet de générer beaucoup plus de bulles oscillantes que ne que produirait la seule cavitation du liquide. Les microbulles agissent en effet comme des germes facilitant la génération de bulles oscillantes dans le générateur de cavitation. Les bulles mises en oscillation dans le générateur de cavitation agissent comme autant de microréacteurs produisant des radicaux hydroxyles à chaque oscillation. L'injection de microbulles a donc un effet déterminant sur la production de radicaux hydroxyles.

L'optimisation du rayon critique des bulles oscillantes favorise l'oscillation, et donc le nombre de radicaux hydroxyles générés par chaque bulle.

Enfin, l'oscillation des bulles produit du peroxyde d'hydrogène. En transformant ce peroxyde d'hydrogène, le générateur de cations ferreux décuple le nombre de radicaux hydroxyles.

La combinaison d'une injection de microbulles, d'un générateur de cavitation paramétré pour favoriser l'oscillation des bulles en sortie du générateur de cavitation et d'un générateur de cations ferreux Fe²⁺ conduit à des performances remarquables. En particulier, elle permet de produire *in situ,* sur de grands volumes de liquide, des radicaux réactifs, avec peu ou pas de produits chimiques, avec une minéralisation très élevée, voire totale, des polluants et avec une cinétique de dégradation très rapide.

Le procédé de traitement selon l'invention peut être notamment utilisé pour traiter des liquides chargés en matière organique, mais aussi l'eau des circuits primaires des centrales nucléaires, ou plus généralement les liquides aqueux contaminés par des ions métalliques radioactifs. Le procédé de traitement selon l'invention permet en effet de précipiter et de coaguler cette contamination, puis de l'extraire du liquide.

## Revendications

1. Procédé de traitement d'un liquide aqueux contenant un polluant organique, ledit procédé comportant une étape consistant à traiter ledit liquide dans une installation (10) de traitement en le faisant circuler dans un dispositif de traitement (20) dans des conditions thermodynamiques adaptées pour générer de la cavitation et des cations ferreux, ladite installation comportant un circuit (12) dans lequel sont insérés une cible (16) et ledit dispositif de traitement dudit liquide sortant de la cible, le liquide à traiter contenant un constituant oxygéné capable de réagir avec lesdits cations ferreux pour générer des radicaux hydroxyles,
ledit dispositif de traitement (20) comportant :
- un dispositif d'injection (25), apte à introduire, dans le liquide, des microbulles d'un fluide oxygéné présentant un diamètre inférieur à 120 µm et supérieur à 25 µm, ledit fluide oxygéné contenant un constituant oxygéné apte à réagir avec des cations ferreux Fe²⁺ pour générer des radicaux hydroxyles,
- un générateur de cavitation (116) en aval du dispositif d'injection (25) et apte à générer, par cavitation, des bulles au sein dudit liquide, dites « bulles de cavitation »,
- une chambre d'implosion desdites bulles de cavitation,
- une vanne de contrepression en aval du générateur de cavitation (116),
- un générateur de cations ferreux Fe²⁺ (118),
la chambre d'implosion des bulles de cavitation (124) étant disposée dans une région dans laquelle le liquide contient desdits cations ferreux, le dispositif d'injection de microbulles (25) et la vanne de contrepression étant réglés de manière que le rayon maximal des bulles de cavitation est inférieur au rayon critique des bulles de cavitation.

2. Procédé de traitement selon la revendication précédente, dans lequel le dispositif d'injection est configuré de manière que
- les microbulles présentent, en moyenne arithmétique, un diamètre inférieur à 100 µm et supérieur à 40 µm, et/ou
- plus de 80% en nombre des microbulles injectées présentent un diamètre compris entre 40 µm et 120 µm, et/ou
- la différence entre le diamètre maximal des microbulles injectées et le diamètre minimal des microbulles injectées est inférieure à 20 µm.

3. Procédé de traitement selon l'une quelconque des revendications précédentes, dans lequel les microbulles injectées présentent un diamètre inférieur à 100 µm.

4. Procédé de traitement selon l'une quelconque des revendications précédentes, dans lequel le dispositif d'injection est un microbulleur (25).

5. Procédé de traitement selon l'une quelconque des revendications précédentes, dans lequel l'injecteur de microbulles et la vanne de contrepression sont réglés de manière que le rayon maximal des bulles de cavitation est inférieur à 0,9 fois le rayon critique des bulles de cavitation.

6. Procédé de traitement selon l'une quelconque des revendications précédentes, dans lequel le générateur de cavitation est un réacteur hydrodynamique (30) et/ou le générateur de cations ferreux est une pile de type « Daniell » entre du fer et un premier matériau conducteur électriquement présentant un potentiel d'électrodes supérieur au fer.

7. Procédé de traitement selon la revendication précédente, dans lequel la cathode de ladite pile comporte du graphite et/ou du graphène.

8. Procédé de traitement selon l'une quelconque des revendications précédentes, dans lequel le générateur de cavitation et/ou le générateur de cations ferreux sont incorporés dans un réacteur hydrodynamique (30) comportant
- des premiers canaux (120) qui débouchent en aval dans une chambre intermédiaire (124), le passage du liquide dans les premiers canaux provoquant son accélération et la génération desdites bulles, ladite chambre intermédiaire constituant ladite chambre d'implosion ;
- des deuxièmes canaux (122) débouchant en amont dans ladite chambre intermédiaire, les deuxièmes canaux étant délimités intérieurement par du fer.

9. Procédé de traitement selon l'une quelconque des revendications précédentes, dans lequel le fluide oxygéné est de l'air et/ou du peroxyde d'hydrogène et/ou de l'ozone.

10. Procédé de traitement selon l'une quelconque des revendications précédentes, mettant en oeuvre un dispositif de traitement comportant une pluralité de modules de réaction dit « perfectionnés », chaque module de réaction perfectionné (115) étant constitué, de l'amont vers l'aval, par
- une chambre amont (123) optionnelle,
- un deuxième bloc (118) comportant une pluralité de deuxièmes canaux (122) délimités intérieurement, au moins partiellement, par du fer,
- optionnellement, une chambre intermédiaire (124),
- un premier bloc (116, 116') comportant une pluralité de premiers canaux (120), le passage du liquide dans les premiers canaux provoquant son accélération et la génération de bulles de cavitation, et
- une chambre aval (114'), le passage du liquide dans la chambre aval provocant son ralentissement et l'implosion des bulles de cavitation.

11. Procédé de traitement selon l'une quelconque des revendications précédentes, mettant en oeuvre un dispositif de traitement comportant un module de réaction dit « simplifié » constitué de l'amont vers l'aval, par un bloc (118, 118', 118") comportant des canaux au moins partiellement délimités par du fer et conformés pour provoquer la génération de bulles de cavitation, et une chambre d'implosion (124, 124', 124") disposée en aval desdits canaux et conformée pour provoquer une implosion desdites bulles de cavitation générées dans lesdits canaux au moins partiellement délimités par du fer.

12. Procédé selon l'une quelconque des revendications précédentes, dans lequel
- le polluant organique est choisi dans le groupe formé par les composés organiques volatils, semi-volatils, les PCB, les pesticides, les herbicides, les dioxines, les furanes, les produits explosifs et leurs produits de dégradation, les produits humiques, les colorants ; et/ou
- le liquide à traiter est issu de la production de pétrole ou de gaz, d'extraction minière, de fracturation hydraulique, d'un comptage ou d'un traitement d'eau, potable ou non ; et/ou
- le liquide à traiter présente une demande chimique en oxygène supérieure à 100 mg/l.

## Patentansprüche

1. Verfahren zur Behandlung einer wässrigen Flüssigkeit, die eine organische Verunreinigung enthält, wobei das Verfahren einen Schritt umfasst, der daraus besteht, die Flüssigkeit in einer Behandlungsanlage (10) zu behandeln, indem diese durch eine Behandlungsvorrichtung (20) unter thermodynamischen Bedingungen zirkulieren gelassen wird, die geeignet sind, eine Kavitation und Eisenkationen zu erzeugen, wobei die Anlage einen Kreislauf (12) umfasst, in den ein Ziel (16) und die Behandlungsvorrichtung der Flüssigkeit, die aus dem Ziel austritt, eingesetzt sind, wobei die zu behandelnde Flüssigkeit einen Sauerstoffbestandteil enthält, der mit den Eisenkationen reagieren kann, um Hydroxylradikale zu erzeugen,
wobei die Behandlungsvorrichtung (20) umfasst:
- eine Einspritzvorrichtung (25), die geeignet ist, in die Flüssigkeit Mikrobläschen eines sauerstoffhaltigen Fluids mit einem Durchmesser kleiner als 120 µm und größer als 25 µm einzubringen, wobei das sauerstoffhaltige Fluid einen Sauerstoffbestandteil enthält, der geeignet ist, mit den Eisenkationen Fe²⁺ zu reagieren, um Hydroxylradikale zu erzeugen,
- einen Kavitationsgenerator (116) stromabwärts von der Einspritzvorrichtung (25), und der geeignet ist, durch Kavitation Bläschen im Inneren der Flüssigkeit zu erzeugen, die als "Kavitationsbläschen" bezeichnet werden,
- eine Kammer zur Implosion der Kavitationsbläschen,
- ein Gegendruckventil stromabwärts vom Kavitationsgenerator (116),
- einen Generator (118) von Eisenkationen Fe²⁺,
wobei die Kammer (124) zur Implosion der Kavitationsbläschen in einer Zone angeordnet ist, in der die Flüssigkeit die Eisenkationen enthält,
wobei die Einspritzvorrichtung (25) der Mikrobläschen und das Gegendruckventil derart geregelt werden, dass der maximale Radius der Kavitationsbläschen kleiner ist als der kritische Radius der Kavitationsbläschen.

2. Behandlungsverfahren nach dem vorhergehenden Anspruch,
wobei die Einspritzvorrichtung derart ausgelegt ist, dass:
- die Mikrobläschen im arithmetischen Mittel einen Durchmesser kleiner als 100 µm und größer als 40 µm aufweisen, und/oder
- mehr als 80 % der Anzahl der eingespritzten Mikrobläschen einen Durchmesser zwischen 40 µm und 120 µm aufweisen, und/oder
- die Differenz zwischen dem maximalen Durchmesser der eingespritzten Mikrobläschen und dem minimalen Durchmesser der eingespritzten Mikrobläschen kleiner als 20 µm ist.

3. Behandlungsverfahren nach einem der vorhergehenden Ansprüche,
wobei die eingespritzten Mikrokügelchen einen Durchmesser kleiner als 100 µm aufweisen.

4. Behandlungsverfahren nach einem der vorhergehenden Ansprüche,
wobei die Einspritzvorrichtung ein Mikro-Bubbler (25) ist.

5. Behandlungsverfahren nach einem der vorhergehenden Ansprüche,
wobei die Einspritzvorrichtung der Mikrobläschen und das Gegendruckventil derart geregelt werden, dass der maximale Radius der Kavitationsbläschen kleiner ist als das 0,9-fache des kritischen Radius der Kavitationsbläschen.

6. Behandlungsverfahren nach einem der vorhergehenden Ansprüche,
wobei der Kavitationsgenerator ein hydrodynamischer Reaktor (30) ist und/oder der Generator von Eisenkationen ein Element des Typs "Daniell" zwischen dem Eisen und einem ersten elektrisch leitenden Material mit einem größeren Elektrodenpotential als Eisen ist.

7. Behandlungsverfahren nach dem vorhergehenden Anspruch,
wobei die Kathode des Elements Graphit und/oder Graphen umfasst.

8. Behandlungsverfahren nach einem der vorhergehenden Ansprüche,
wobei der Kavitationsgenerator und/oder der Generator von Eisenkationen in einem hydrodynamischen Reaktor (30) eingebaut ist/sind, umfassend:
- erste Kanäle (120), die stromabwärts in eine Zwischenkammer (124) münden, wobei das Hindurchgehen der Flüssigkeit in den ersten Kanälen ihre Beschleunigung und die Erzeugung der Bläschen hervorruft, wobei die Zwischenkammer die Implosionskammer bildet;
- zweite Kanäle (122), die stromaufwärts in die Zwischenkammer münden, wobei die zweiten Kanäle im Inneren von Eisen abgegrenzt werden.

9. Behandlungsverfahren nach einem der vorhergehenden Ansprüche,
wobei das sauerstoffhaltige Fluid Luft und/oder Wasserstoffperoxid und/oder Ozon ist.

10. Behandlungsverfahren nach einem der vorhergehenden Ansprüche,
welches eine Behandlungsvorrichtung verwendet, umfassend eine Vielzahl von als "perfektioniert" bezeichneten Reaktionsmodulen, wobei jedes perfektionierte Reaktionsmodul (115), von stromaufwärts nach stromabwärts, besteht aus:
- einer optionalen stromaufwärtigen Kammer (123),
- einem zweiten Block (118), umfassend eine Vielzahl zweiter Kanäle (122), die im Inneren, mindestens teilweise, von Eisen abgegrenzt werden,
- gegebenenfalls einer Zwischenkammer (124),
- einem ersten Block (116, 116'), umfassend eine Vielzahl erster Kanäle (120), wobei das Hindurchgehen der Flüssigkeit in den ersten Kanälen ihre Beschleunigung und die Erzeugung von Kavitationsbläschen hervorruft, und
- einer stromabwärtigen Kammer (114'), wobei das Hindurchgehen der Flüssigkeit in der stromabwärtigen Kammer ihre Verlangsamung und die Implosion der Kavitationsbläschen hervorruft.

11. Behandlungsverfahren nach einem der vorhergehenden Ansprüche,
welches eine Behandlungsvorrichtung verwendet, umfassend ein als "vereinfacht" bezeichnetes Reaktionsmodul, das, von stromaufwärts nach stromabwärts, besteht aus: einem Block (118, 118', 118"), umfassend Kanäle, die mindestens teilweise von Eisen abgegrenzt werden und geeignet sind, die Erzeugung von Kavitationsbläschen hervorzurufen, und einer Implosionskammer (124, 124', 124"), die stromabwärts von den Kanälen angeordnet ist und geeignet ist, eine Implosion der Kavitationsbläschen hervorzurufen, die in den mindestens teilweise von Eisen abgegrenzten Kanälen erzeugt werden.

12. Verfahren nach einem der vorhergehenden Ansprüche, wobei:
- die organische Verunreinigung ausgewählt wird aus der Gruppe gebildet durch flüchtige, halb-flüchtige organische Verbindungen, PCB, Pestizide, Herbizide, Dioxine, Furane, explosive Produkte und ihre Abbauprodukte, Huminprodukte, Farbstoffe; und/oder
- die zu behandelnde Flüssigkeit aus der Herstellung von Erdöl oder Gas, dem Bergbau, der hydraulischen Frakturierung, einer Messung oder einer Behandlung von Wasser, Trinkwasser oder nicht, stammt; und/oder
- die zu behandelnde Flüssigkeit einen chemischen Sauerstoffbedarf größer als 100 mg/l aufweist.

## Claims

1. Process for the treatment of an aqueous liquid containing an organic pollutant, said process comprising a stage consisting in treating said liquid in a treatment plant (10) by circulating it through a treatment device (20) under thermodynamic conditions suitable for generating cavitation and ferrous cations, said plant comprising a circuit (12) into which are inserted a target (16) and said device for the treatment of said liquid exiting from the target, the liquid to be treated containing an oxygen-based constituent capable of reacting with said ferrous cations in order to generate hydroxyl radicals,
said treatment device (20) comprising:
- an injection device (25) capable of introducing, into the liquid, microbubbles of an oxygen-based fluid exhibiting a diameter of less than 120 µm and greater than 25 µm, said oxygen-based fluid containing an oxygen-based constituent capable of reacting with ferrous Fe²⁺ cations in order to generate hydroxyl radicals,
- a cavitation generator (116) downstream of the injection device (25) and capable of generating, by cavitation, bubbles within said liquid, which are referred to as "cavitation bubbles",
- a chamber for implosion of said cavitation bubbles,
- a backpressure valve downstream of the cavitation generator (116),
- a generator (118) of ferrous Fe²⁺ cations,
the chamber (124) for implosion of the cavitation bubbles being positioned in a region in which the liquid contains said ferrous cations,
the device (25) for injection of microbubbles and the backpressure valve being adjusted so that the maximum radius of the cavitation bubbles is less than the critical radius of the cavitation bubbles.

2. Treatment process according to the preceding claim, in which the injection device is configured so that:
- the microbubbles exhibit, as arithmetic mean, a diameter of less than 100 µm and greater than 40 µm, and/or
- more than 80% by number of the microbubbles injected exhibit a diameter of between 40 µm and 120 µm, and/or
- the difference between the maximum diameter of the microbubbles injected and the minimum diameter of the microbubbles injected is less than 20 µm.

3. Treatment process according to either one of the preceding claims, in which the microbubbles injected exhibit a diameter of less than 100 µm.

4. Treatment process according to any one of the preceding claims, in which the injection device is a microbubbler (25).

5. Treatment process according to any one of the preceding claims, in which the injector of microbubbles and the backpressure valve are adjusted so that the maximum radius of the cavitation bubbles is less than 0.9 times the critical radius of the cavitation bubbles.

6. Treatment process according to any one of the preceding claims, in which the cavitation generator is a hydrodynamic reactor (30) and/or the generator of ferrous cations is a cell of "Daniell" type between iron and a first electrically conductive material exhibiting a greater electrode potential than iron.

7. Treatment process according to the preceding claim, in which the cathode of said cell comprises graphite and/or graphene.

8. Treatment process according to any one of the preceding claims, in which the cavitation generator and/or the generator of ferrous cations are incorporated in a hydrodynamic reactor (30) comprising:
- first channels (120) which emerge downstream in an intermediate chamber (124), the passage of the liquid through the first channels bringing about its acceleration and the generation of said bubbles, said intermediate chamber constituting said implosion chamber;
- second channels (122) emerging upstream in said intermediate chamber, the second channels being delimited internally by iron.

9. Treatment process according to any one of the preceding claims, in which the oxygen-based fluid is air and/or hydrogen peroxide and/or ozone.

10. Treatment process according to any one of the preceding claims, employing a treatment device comprising a plurality of "improved" reaction modules, each improved reaction module (115) being composed, from the upstream toward the downstream, of:
- an optional upstream chamber (123),
- a second block (118) comprising a plurality of second channels (122) delimited internally, at least partially, by iron,
- optionally an intermediate chamber (124),
- a first block (116, 116') comprising a plurality of first channels (120), the passage of the liquid through the first channels bringing about its acceleration and the generation of cavitation bubbles, and
- a downstream chamber (114'), the passage of the liquid through the downstream chamber causing it to slow down and causing the implosion of the cavitation bubbles.

11. Treatment process according to any one of the preceding claims, employing a treatment device comprising a "simplified" reaction module composed, from the upstream toward the downstream, of a block (118, 118', 118") comprising channels at least partially delimited by iron and shaped in order to bring about the generation of cavitation bubbles, and an implosion chamber (124, 124', 124") positioned downstream of said channels and shaped in order to bring about an implosion of said cavitation bubbles generated in said channels at least partially delimited by iron.

12. Process according to any one of the preceding claims, in which:
- the organic pollutant is chosen from the group formed by volatile organic compounds, semivolatile compounds, PCBs, pesticides, herbicides, dioxins, furans, explosives and their decomposition products, humic products and colorants; and/or
- the liquid to be treated results from the production of oil or gas, from mining, from hydraulic fracturing, from a metering or from a treatment of potable or nonpotable water; and/or
- the liquid to be treated exhibits a chemical oxygen demand of greater than 100 mg/l.
